# EUROPÄISCHE PATENTSCHRIFT

(11) **EP 2 551 171 B1**
(45) Veröffentlichungstag und Bekanntmachung des Hinweises auf die Patenterteilung: **03.09.2014**
(21) Anmeldenummer: 12176571.3
(22) Anmeldetag: 16.07.2012
(51) Int. Cl.: B61K 3/00, E01B 19/00

(54) **Vorrichtung zum Benetzen oder Schmieren eines Schienenkopfs**
Device for dampening or lubricating a rail head
Dispositif d'humidification ou de lubrification d'une tête de rail

(30) Priorität: 25.07.2011 DE 202011103633 U
(43) Veröffentlichungstag der Anmeldung: 30.01.2013
(73) Patentinhaber: Lincoln GmbH, 69190 Walldorf (DE)
(72) Erfinder: Paluncic, Zdravko, 67067 Ludwigshafen (DE); Mandera, Markus, 69181 Leimen (DE)
(74) Vertreter: Keil & Schaafhausen Patent- und Rechtsanwälte

(56) Entgegenhaltungen:
- WO-A1-2007/110887
- GB-A- 2 446 504
- US-A1- 2009 000 869

## Beschreibung

Die Erfindung betrifft eine Vorrichtung zum Benetzen oder Schmieren eines Schienenkopfs mit mindestens einem Auslass für ein Benetzungs- und/oder Schmiermittel.

Die Verkehrsdichte in Städten und industriellen Ballungsgebieten ist in den vergangenen Jahren stark angestiegen. Um den Verkehr auf der Straße zu entlasten, werden in vielen Städten und Gemeinden Verkehrsströme auf gleisgebundene Verkehrsmittel wie Straßenbahnen, Stadtbahnen, U- und S-Bahnen verlagert.

In Bezug auf den Ausbau des schienengebundenen Verkehrsnetzes gelangen in jüngerer Zeit auch Belange des Umweltschutzes, wie z.B. die Lärmbelästigung, in den Vordergrund von Diskussionen. In diesem Zusammenhang ist bekannt, dass insbesondere bei der Bogenfahrt von schienengeführten Fahrzeugen durch Quergleiten des Rads auf der Schiene in Verbindung mit Haftreibung Schwingungen in der Schiene angeregt werden. Diese führen zu einem erhöhten Rad- und Schienenverschleiß und zu Körper- und Luftschallemissionen. Um die Haftreibung zu reduzieren und so die Geräuschbildung zu minimieren, werden Schmieranlagen genutzt, mit denen insbesondere der Schienenkopf einer Schiene geschmiert werden kann.

Aus der Veröffentlichung EI - Eisenbahningenieur (51) 9/2000, Seite 54 ff. ist eine Schienenkopf-Schmieranlage bekannt, welche bei der Kurvenfahrt Schienenkopftrennmittel auf die Schienenoberflächen sprüht. Sie ist Teil einer kombinierten Spurkranz- und Schienenkopfschmieranlage eines Schienenfahrzeugs. Beide Teilanlagen weisen eine gemeinsame Druckluftversorgung und Steuerung auf. Bei dieser Lösung ist nachteilig, dass der Schmierstoff durch den Abstand von der Schmierstelle bei der Auftragung mittels einer Düse mit Druckluft vermischt wird. Dadurch ist das System wetterabhängig und funktioniert nicht immer zuverlässig. Ferner wird das Schmiermittel in einem großen Bereich verteilt, was ebenfalls Umweltschäden verursacht.

Aus der Druckschrift DE 10 2004 060 804 A1 ist eine Schienenschmier- und Benetzungsvorrichtung für gleisgeführte Fahrzeuge mit einem Gleis, auf dem das betreffende Fahrzeug mit Rädern zwangsgeführt ist, bekannt. Die Rille der Rillenschiene dient bei der bekannten Vorrichtung als Schmierstoffreservoir, wobei die Rille über mindestens eine Zulaufleitung mit einem fließfähigen Schmierstoff bis zu einer vorbestimmten Höhe gesteuert mit dem Schmiermittel füllbar ist. Die bei diesem Vorschlag verwendete Schmierrille in der Schiene zur Aufnahme des Schmierstoffs ist nicht immer gewünscht und stellt für den Einsatz in der freien Umwelt ebenfalls eine wetter- und verschmutzungsabhängige Komponente dar.

Aus der Entgegenhaltung WO 2007/110887 A1 ist eine Schmiereinrichtung für Schienen mit einer Stützstruktur bekannt, welche dicht an einer Schiene positioniert werden kann. Die Stützstruktur weist außerdem einen mobilen Kopf auf, an dem eine ein Schmiermittel abgebende Düse befestigt ist. Zur Bewegung der Düse sind Bewegungsmittel vorgesehen, welche einen pneumatischen linearen Aktuator mit einem mit dem Kopf integralen feststehenden ersten Abschnitt und einem mobilen Abschnitt aufweist, der mit der Düse verbunden ist. Der mobile Abschnitt des Aktuators ist beweglich zwischen einer ersten Position, welche die Düse in eine Betriebsposition bringt, und einer zweiten Position, in welcher sich die Düse in einer Ruheposition befindet.

Aus der Druckschrift US 2009/0000869 A1 ist eine Vorrichtung für die Aufbringung eines pumpbaren Materials auf einen Schienenkopf bekannt, welcher einen Körper mit einer Öffnung für die Förderung des pumpbaren Materials auf die obere Fläche der Schiene aufweist. Die bekannte Vorrichtung besitzt eine Aufbringeinrichtung mit einem Halter, welcher ein Paar von drehbaren Stangen aufweist, welches lateral (horizontal) von Endabschnitten einer Befestigungsplatte absteht und für eine drehbare Befestigung an einer Befestigungseinrichtung vorgesehen ist. Hierdurch kann die Aufbringeinrichtung nach oben und nach unten um eine im Wesentlichen horizontale Achse zwischen einer Arbeitsposition und einer Schienen-Serviceposition gedreht werden. In der Arbeitsposition befindet sich ein Aufbringstab in der Nähe des Schienenkopfs, während dieser in der Schienen-Serviceposition entfernt vom Schienenkopf angeordnet ist, so dass die Schiene instand gesetzt werden kann.

Aus der Druckschrift GB 2 446 504 A ist eine Schmierstoffverteilerstange für eine Schiene mit einer justierbaren Düsenbaugruppe bekannt. Die Düsenbaugruppe weist eine Düse und einen Körper auf, wobei die Düse insbesondere mittels eines an dem Körper angebrachten flexiblen Kugelgelenks justierbar ist, welches eine Drehbewegung der Düse in jede Richtung erlaubt.

Die Aufgabe der vorliegenden Erfindung besteht demnach darin, eine Vorrichtung zum Benetzen oder Schmieren eines Schienenkopfs zu schaffen, welche sicher und wetterunabhängig eine Geräuschreduzierung eines gleisgeführten Fahrzeugs bewirkt sowie einfach, kleinbauend und kostengünstig aufgebaut ist.

Die obige Aufgabe wird gelöst durch eine Vorrichtung mit den Merkmalen des Anspruchs 1.

Insbesondere ist bei der erfindungsgemäßen Vorrichtung zum Benetzen und/oder Schmieren eines Schienenkopfs der schienenkopfseitige Endabschnitt des mindestens einen Auslasses zwischen einer ersten, von dem Schienenkopf entfernten Position und einer zweiten, dem Schienenkopf angenäherten Position beweglich geführt. In der ersten Position, in dem sich der schienenkopfseitige Endabschnitt des mindestens einen Auslasses in einer von dem Schienenkopf entfernten Position befindet, wird kein Schmiermittel und/oder Benetzungsmittel ausgegeben. In dieser Position befindet sich der schienenkopfseitige Endabschnitt des Auslasses in einer im Wesentlichen inaktiven Wartestellung oder Ruheposition.

Wenn eine Schmierung und Benetzung der Schiene, beispielsweise in bestimmten, von einem Steuergerät vorgegebenen Zeitabständen, gewünscht wird, so wird die erfindungsgemäße Vorrichtung entsprechend angesteuert und die Bewegung des schienenkopfseitigen Endabschnittes in die zweite, dem Schienenkopf angenäherte Position bewirkt. In diesem aktiven Zustand erfolgt der Auftrag des Benetzungs- und/oder Schmiermittels (im Folgenden kurz: Schmiermittel) auf den Schienenkopf, insbesondere auf eine Deckfläche des Schienenkopfs. Vorzugsweise befindet sich mindestens ein Teil, besonders bevorzugt der vordere Teil, des schienenkopfseitigen Endabschnitts des Auslasses in der zweiten Position oberhalb des Schienenkopfs, insbesondere oberhalb der Deckfläche des Schienenkopfs. Alternativ kann die vordere Spitze des schienenkopfseitigen Endabschnitts unmittelbar, d.h. maximal wenige Millimeter, neben der Seitenfläche und oberhalb der Deckfläche des Schienenkopfs angeordnet sein. In der ersten Position befindet sich die vordere Spitze des schienenkopfseitigen Endabschnitts horizontal beispielsweise mindestens etwa 100 mm, vorzugsweise mindestens etwa 135 mm, von der inneren Seitenflanke oder Seitenfläche der Schiene entfernt, welche der Seite der Schiene, von der sich der Auslass der Schiene nähert, gegenüber liegt. In der zweiten Position ist die vordere Spitze des schienenkopfseitigen Endabschnitts in horizontaler Richtung maximal etwa 50 mm, vorzugsweise etwa 25 mm bis etwa 45 mm, von der inneren Seitenflanke oder Seitenfläche der Schiene entfernt. In vertikaler Richtung kann der Abstand der vorderen Spitze des schienenkopfseitigen Endabschnitts des Auslasses von der Deckfläche des Schienenkopfs zwischen der zweiten Position und der ersten Position unverändert bleiben und beispielsweise bis zu etwa 20 mm betragen. Alternativ kann der Abstand der vorderen Spitze des schienenkopfseitigen Endabschnitts in vertikaler Richtung von der Deckfläche des Schienenkopfs in der ersten Position mehr als etwa 40 mm, vorzugsweise mehr als etwa 55 mm, und in der zweiten Position maximal etwa 20 mm, vorzugsweise maximal etwa 15 mm, betragen.

In der zweiten, aktiven Position wird der Schmierstoff konzentriert und direkt auf den Schienenkopf, vorzugsweise auf die Deckfläche des Schienenkopfs, aufgetragen. Das Schmiermittel gelangt demnach genau auf den Zielort der Schmierung bzw. Benetzung. Außerdem werden Umweltschäden durch reduzierte Leckage in das Gleisbett verringert, da der Schmierstoff nicht mittels einer Düse und Druckluft weit sondern durch die räumliche Nähe des Auslasses zu der zu schmierenden bzw. zu benetzenden Stelle nur in einem sehr kleinen räumlichen Bereich verteilt wird. Auch der Verbrauch an Schmiermittel wird reduziert, da durch den direkten Auftrag auf den Schienenkopf geringere Schmierstoffmengen benötigt werden.

Durch die erfindungsgemäße Lösung wird gleichzeitig aufgrund der Beweglichkeit des schienenkopfseitigen Endabschnitts des Auslasses zwischen der ersten und der zweiten Position gewährleistet, dass der Auslass der Vorrichtung in den Zeiträumen, in denen kein Auftrag des Benetzungs- und/oder Schmiermittels auf den Schienenkopf erfolgt, in einem sicheren Abstand von der Schiene bzw. dem Schienenkopf angeordnet ist, so dass die Bewegung eines auf den Schienen vorbei fahrenden Schienenfahrzeugs nicht beeinflusst wird.

Um derartige Beeinträchtigungen von Schienenfahrzeugen durch im und am Gleis angeordnete Vorrichtungen zu vermeiden, geben Gleisbetreiber häufig einen sogenannten Lichtraum vor, welcher ein unzulässiger Raum für starre und unbewegliche Teile darstellt und welcher beispielsweise in eine Richtung quer zur Schiene eine Abmessung von etwa 135 mm und in eine Richtung senkrecht zur Deckfläche des Schienenkopfes, d.h. in vertikaler Richtung, eine Abmessung von etwa 55 mm aufweist. Die erste Position der erfindungsgemäßen Vorrichtung wird so gewählt, dass der Auslass außerhalb des Lichtraums angeordnet ist, während der schienenkopfseitige Endabschnitt des Auslasses in der zweiten Position innerhalb des Lichtraums angeordnet ist.

In einem bevorzugten Ausführungsbeispiel der Erfindung ist der schienenkopfseitige Endabschnitt des Auslasses rohrförmig ausgebildet. Der Auslass kann so kostengünstig hergestellt werden.

Es ist von Vorteil, wenn der schienenkopfseitige Endabschnitt des Auslasses flexibel, beispielsweise elastisch biegbar und/oder quetschbar, ausgeführt ist. Durch diese Ausgestaltung kann dann, wenn aufgrund einer Störung des Zustellantriebs ein Teil des schienenkopfseitigen Endabschnitts in dem Lichtraum verbleibt, obwohl er sich eigentlich in der Ruheposition außerhalb des Lichtraums befinden sollte, die Unfallgefahr beim Vorbeifahren eines Fahrzeugs minimiert werden.

Aus gleichem Grund ist es von Vorteil, wenn der schienenkopfseitige Endabschnitt des Auslasses aus einem preisgünstigen und leicht herstellbaren Material besteht. Vorzugsweise enthält der schienenkopfseitige Endabschnitt des Auslasses einen Kunststoff, vorzugsweise Polyamid (PA), oder besteht vollständig aus diesem Material. Zusätzlich kann der schienenkopfseitige Endabschnitt Kohlenstoff enthalten, beispielsweise können Kohlenstoff-Fasern eingesetzt werden. Die Verwendung von Kohlenstoff hat den Vorteil, dass das Rohr durch dieses Material eine erhöhte Steifigkeit erhält.

Weiterhin ist es aus dem gleichen Grund von Vorteil, wenn der schienenkopfseitige Endabschnitt des Auslasses auswechselbar ausgebildet ist.

In einer weiteren Ausgestaltung der vorliegenden Erfindung ist der schienenkopfseitige Endabschnitt des Auslasses in einem Lagerblock geführt oder mit einem Lagerblock beweglich. In beiden Fällen wird der Lagerblock so angeordnet, dass dieser keinesfalls in den Lichtraum eindringen kann. Die Führung in oder die Bewegung des schienenkopfseitigen Endabschnitts des Auslasses mit dem Lagerblock bewirkt, dass die Zustell- bzw. Abstellbewegung leichter steuerbar und somit zuverlässiger wird.

Zur Verschiebung des schienenkopfseitigen Endabschnitts des Auslasses ist dieser erfindungsgemäß mit einer Antriebseinrichtung verbunden, welche den schienenkopfseitigen Endabschnitt des Auslasses zwischen der von dem Schienenkopf entfernten ersten Position und der dem Schienenkopf angenäherten zweiten Position bewegt. Die Antriebseinrichtung weist hierfür vorzugsweise einen Kolben auf, wobei die Bewegung des Kolbens auf den schienenkopfseitigen Endabschnitt des mindestens einen Auslasses übertragen wird und wobei der Kolben zur Bewegung des schienenkopfseitigen Endabschnitts des mindestens einen Auslasses in einem Zylinder hin und her bewegbar ist. Der Antrieb zur Bewegung des Auslasses kann damit sehr einfach und leicht steuerbar realisiert. Mittels des Kolben-/Zylinderantriebs kann gleichzeitig auch das Schmier- und/oder Benetzungsmittel gefördert werden. Hierdurch kann die Vorrichtung kostengünstiger und mit vergleichsweise kleineren äußeren Abmessungen realisiert werden.

Bei der erfindungsgemäßen Ausgestaltung mit einem Kolben- und Zylinderantrieb weist der Zylinder eine schienenkopfseitige Kammer und eine dem Schienenkopf abgewandte Kammer auf, wobei die schienenkopfseitige Kammer über eine Entlastungsleitung mit dem Schmierstoffbehälter und die dem Schienenkopf abgewandte Kammer über eine Pumpe mit dem Schmierstoffbehälter verbindbar ist.

Weiterhin von Vorteil ist, wenn ein Abschnitt der Schmierleitung, der sich an den schienenkopfseitigen Endabschnitt des Auslasses in Richtung Pumpe anschließt, beweglich und/oder flexibel, z.B. elastisch biegbar und/oder quetschbar, ausgebildet ist. Dieser Abschnitt der Schmierleitung folgt der Bewegung des schienenkopfseitigen Endabschnitts zwischen der ersten und der zweiten Position, während der verbleibende Teil der Vorrichtung zumindest bezüglich des die Vorrichtung aufnehmenden Systems (z.B. Schienenbett oder Schienenfahrzeug) festgelegt ist.

Eine hinsichtlich der Schmierstoffverteilung günstige Realisierung einer erfindungsgemäßen Vorrichtung mit einer Vielzahl von Auslässen, beispielsweise 4 oder 8 Auslässen, wird dadurch erreicht, dass jeder Auslass mit je einem Ausgang eines Progressivverteilers verbunden ist. Alternativ kann ein Einleitungsverteiler oder eine dezentrale Schmierstoffverteilung vorgesehen sein.

In einem weiteren Ausführungsbeispiel kann die erfindungsgemäße Vorrichtung eine Überwachungseinrichtung aufweisen, welche den Position des Auslasses und/oder die Position des Lagerblocks überwacht. Die Überwachung erfolgt dahingehend, ob die Zustellbewegung zu der zweiten Position und/oder die Rückstellbewegung zurück zur ersten Position des schienenkopfseitigen Endabschnitts des Auslasses oder des Lagerblocks erfolgt sind und, wenn ja, in welcher Position sich der jeweilige schienenkopfseitige Endabschnitts des jeweiligen Auslasses jetzt befindet. Hierdurch kann festgestellt werden, ob sich noch ein Teil des Auslasses innerhalb des Lichtraums befindet oder nicht. Zusätzlich kann der funktionstüchtige Zustand des schienenkopfseitigen Endabschnittes des Auslasses durch Wartungspersonal optisch geprüft werden.

Die erfindungsgemäße Vorrichtung kann neben einer Schiene, welche den Schienenkopf ausbildet, d.h. stationär festgelegt oder in einem (sich bewegenden) Schienenfahrzeug angeordnet sein.

Weiterbildungen, Vorteile und Anwendungsmöglichkeiten der Erfindung ergeben sich auch aus der nachfolgenden Beschreibung von Ausführungsbeispielen der vorliegenden Erfindung sowie den Figuren. Dabei sind alle beschriebene und/oder bildlich dargestellten Merkmale für sich oder in beliebiger Kombination Teil der Erfindung, unabhängig von ihrer Zusammenfassung in den Ansprüchen oder deren Rückbeziehung.

Es zeigen schematisch:
- Fig. 1 und 2: ein erstes Ausführungsbeispiel einer erfindungsgemäßen Vorrichtung als Prinzipskizze und
- Fig. 3 und 4: ein zweites Ausführungsbeispiel einer erfindungsgemäßen Vorrichtung ebenfalls als Prinzipskizze.

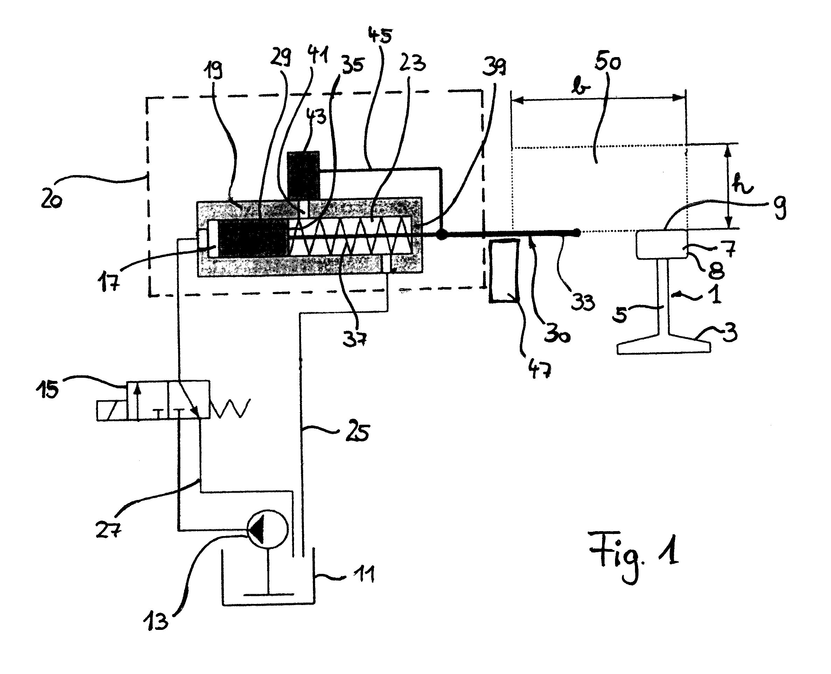

Fig. 1 zeigt eine Schiene 1 im Querschnitt, welche einen flanschartigen Fuß 3, einen Steg 5, der sich vom Fuß nach oben erstreckt, und einen Schienenkopf 7 aufweist. Der Schienenkopf 7 ist oberhalb des Stegs 5 angeordnet. Der Schienenkopf 7 hat eine Deckfläche 9, auf welche die Aufbringung des Benetzungs- und/oder Schmiermittels durch die erfindungsgemäße Vorrichtung erfolgen soll.

Seitlich neben der Schiene 1, insbesondere außerhalb des Bewegungsraums eines auf der Schiene 1 fahrenden Schienenfahrzeugs und beispielsweise in einem Kurvenbereich, ist die erfindungsgemäße Vorrichtung zum Benetzen und/oder Schmieren des Schienenkopfes 7 angeordnet. Im Folgenden wird die erfindungsgemäße Vorrichtung kurz als Schmiervorrichtung bezeichnet.

In einem Ausführungsbeispiel der vorliegenden Erfindung kann die erfindungsgemäße Schmiervorrichtung beispielsweise acht Auslässe 30, wie sie in Fig. 1 dargestellt sind, aufweisen. Die Vorrichtung kann jedoch auch weniger oder mehr Auslässe 30 vorsehen. Bei der Verwendung mehrerer Auslässe 30 hat jeder Auslass von dem jeweils nächsten Auslass einen festen, vorgegebenen Abstand entlang der Schiene 1 voneinander, beispielsweise einen Abstand zwischen etwa 80 mm und etwa 170 mm, bevorzugt zwischen etwa 100 mm und etwa 150 mm.

Die Schmiervorrichtung weist einen Schmierstoffbehälter 11 auf, aus dem mittels einer Schmierpumpe 13 Schmiermittel und/oder Benetzungsmittel (im Folgenden kurz Schmiermittel) über ein 3/2-Wegeventil 15 in eine dem Schienenkopf 7 abgewandte Kammer 17 eines in einer Antriebseinheit 20 angeordneten Zylinders 19 gefördert wird. Eine schienenkopfseitige Kammer 23 des Zylinders 19 ist über eine Entlastungsleitung 25 mit dem Schmierstoffbehälter 11 verbunden. Der schmierstoffbehälterseitige Eingang (bzw. Ausgang) der dem Schienenkopf abgewandten Kammer 17 des Zylinders 19 ist ferner über das 3/2-Wegeventil 15 mit dem Schmierstoffbehälter 11 über eine nicht über die Pumpe 13 laufende Rückleitung 27 verbunden.

Ein in dem Zylinder 19 geführter beweglicher Kolben 29 ist mit dem Auslass 30 der Schmiervorrichtung derart mechanisch verbunden, dass der schienenkopfseitige Endabschnitt 33 des Auslasses der Bewegung des Kolbens 29 folgt. Die schienenkopfseitige Stirnfläche 35 des Kolbens 29 ist ferner über eine Rückstellfeder 37 mit der gegenüber liegenden Stirnfläche 39 der schienenkopfseitigen Kammer 23 des Zylinders 19 verbunden. Ein dritter Ausgang 41 des Zylinders 19 ist fluidisch über einen Verteiler 43 und eine Schmierleitung 45 mit dem Auslass 30 verbunden.

Bei einer Ausführungsform mit mehreren Auslässen können beispielsweise vier Auslässe 30 mit einem Verteiler 43, der vorzugsweise als Progressivverteiler oder Einleitungsverteiler ausgeführt ist, verbunden sein. Ferner bewirkt die Antriebseinheit 20 in der Regel eine Bewegung aller Auslässe 30 einer Schmiervorrichtung. Alternativ kann für Gruppen von Auslässen 30, im vorliegenden Ausführungsbeispiel mit acht Auslässen 30 z.B. für jeweils vier Auslässe 30, eine separate Antriebseinheit 20 vorgesehen sein.

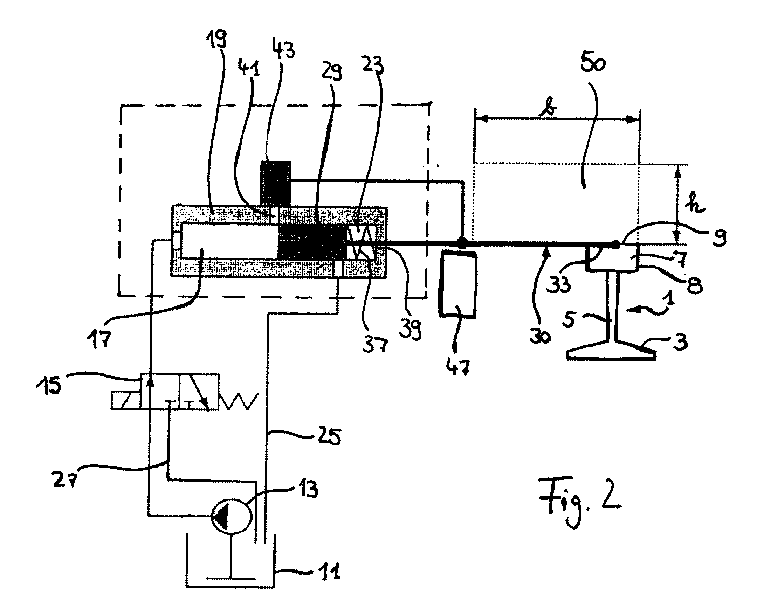

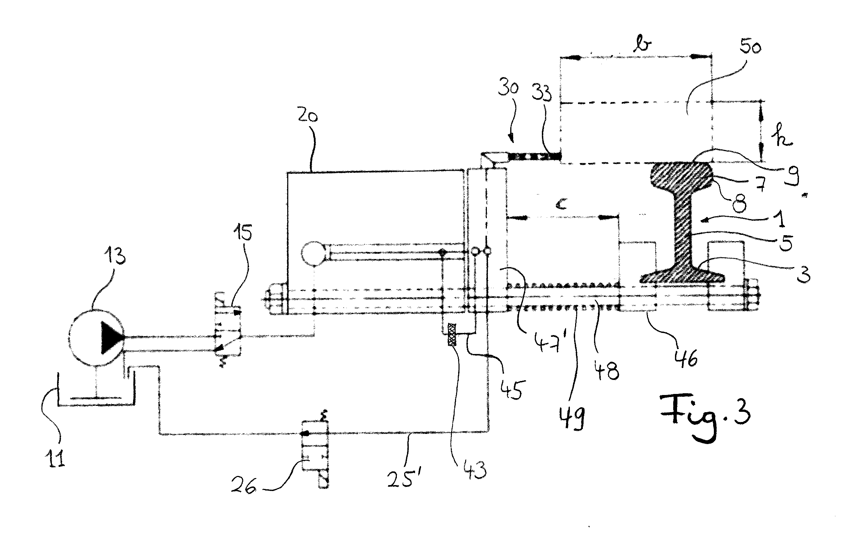

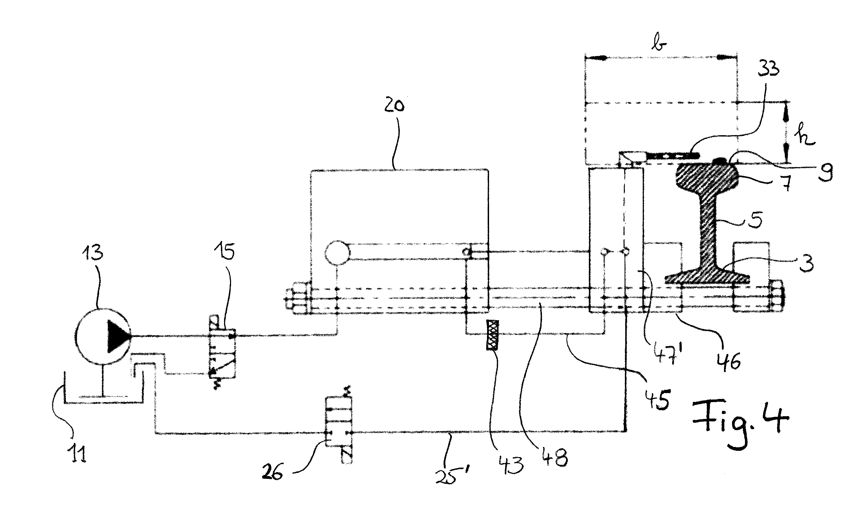

Der schienenkopfseitige Endabschnitt 33 des Auslasses 30 für das Schmiermittel ist als flexibles Rohr ausgebildet und besteht beispielsweise aus einem Kunststoff wie Polyamid (PA). Der schienenkopfseitige Endabschnitt 33 wird in einem Lagerblock 47 geführt, welcher außerhalb eines Lichtraums 50 angeordnet ist. In Fig. 1 und 2 ist der Lichtraum 50 mit gepunkteten Linien umrandet, während der Lichtraum 50 in Fig. 3 und 4 mit einer gestrichelten Linie umrissen ist.

Der Lichtraum 50 ist ein dreidimensionaler Raum, welcher sich entlang der Schiene 1 mit einer vorgegebenen Höhe h (d.h. in vertikaler Richtung), welche beispielsweise etwa 55 mm beträgt, direkt oberhalb der Deckfläche 9 des Schienenkopfs 7 erstreckt. Der Lichtraum 50 hat eine vorgegebene Breite b, welche beispielsweise etwa 135 mm beträgt und sich von der Innenflanke 8 des Schienenkopfes 7 nach außen erstreckt.

Fig. 1 zeigt den Zustand der Schmiervorrichtung, in dem sich der schienenkopfseitige Endabschnitt 33 des Auslasses 30 in einer vom Schienenkopf entfernten Position, d.h. in Ruheposition bzw. außerhalb oder am Rande des Lichtraums 50 befindet.

Fig. 2 stellt demgegenüber den Zustand der erfindungsgemäßen Vorrichtung zu dem Zeitpunkt dar, in dem der schienenkopfseitige Endabschnitt 33 des Auslasses 30 in der zweiten Position angeordnet ist, d.h. wenn die Schmierung bzw. Benetzung erfolgt und auf die Deckfläche 9 des Schienenkopfes 7 Schmiermittel aufgetragen wird. Hierzu wird der schienenkopfseitige Endabschnitt 33 durch die Antriebseinrichtung 20 so weit bewegt, dass seine vordere Spitze oberhalb der Deckfläche 9 des Schienenkopfes 7 angeordnet ist. Mit anderen Worten: In der zweiten, aktiven Position dringt der Auslass 30 mit seinem schienenkopfseitigen Endabschnitt 33 in den Lichtraum 50 ein.

Die Bewegung des schienenkopfseitigen Endabschnitts 33 zwischen dem in den Fig. 1 gezeigten ersten Zustand und dem in Fig. 2 dargestellten zweiten Zustand sowie die Schmiermittelversorgung wird im Folgenden beschrieben.

Wenn ein Schmier- und/oder Benetzungsmittel auf den Schienenkopf 7 aufgetragen werden soll, so wird ausgehend von dem in Fig. 1 gezeigten Ausgangszustand der erfindungsgemäßen Vorrichtung das 3/2 Wegeventil 15 umgeschaltet und die Pumpe 13 mit der dem Schienenkopf 7 abgewandten Kammer 17 verbunden. Hierdurch wird Schmiermittel unter dem von der Pumpe 13 erzeugten Druck in die dem Schienenkopf 7 abgewandte Kammer 17 des Zylinders 19 gepumpt. Der Pumpendruck bewirkt außerdem, dass sich der Kolben 29 in Richtung des Schienenkopfs 7 gegen die von der Rückstellfeder 37 ausgeübte Kraft bewegt. Der Ausgang 41 des Zylinders 19 ist zunächst mit der schienenkopfseitigen Kammer 23 des Zylinders 19 verbunden und wird dann durch den Kolben 29 verschlossen.

Durch die Bewegung des Kolbens 29 in Richtung des Schienenkopfes 7 wird, geführt durch den Lagerblock 47, der schienenkopfseitige Endabschnitt 33 in Richtung des Schienenkopfes 7 bewegt (verschoben), so dass dieser in den Lichtraum 50 eindringt und schließlich mit seiner vorderen Spitze oberhalb des Schienenkopfes 7 (wie in Fig. 2 dargestellt) angeordnet ist.

In einer weit in Richtung Schienenkopf 7 vorgeschobenen Position des Kolbens 29 wird zudem der Ausgang 41 des Zylinders 19 frei und mit der dem Schienenkopf 7 abgewandten Kammer 17 des Zylinders 19 verbunden. Hierdurch kann mittels Pumpe 13 Schmiermittel über den Verteiler 43 und die Schmierleitung 45 in den schienenkopfseitigen Endabschnitt 33 des Auslasses 30 gefördert werden, und zwar genau in dem Zeitraum, in dem der Auslass 30 in der zweiten, aktiven Position angeordnet ist. Die Schmierleitung 45 ist aufgrund der Beweglichkeit des Auslasses 30 ebenfalls beweglich und flexibel ausgebildet und weist eine ausreichende Länge auf, dass sie der Bewegung des Auslasses 30 folgen kann.

Nach Beendigung des Schmiervorgangs schaltet das 3/2-Wegeventil 15 um. Die Pumpe 13 besitzt dadurch keine Verbindung mit der Kammer 17 des Zylinders 19 mehr. Aufgrund des fehlenden Pumpendruckes wird der Kolben 29 durch die Kraft der Rückstellfeder 37 in den in Fig. 1 dargestellten Ausgangszustand zurück bewegt. Das überschüssige, in der von dem Schienenkopf 7 abgewandten Kammer 17 vorhandene Schmiermittel wird über das 3/2-Wegeventil 15 und die Rückleitung 27 in den Schmierstoffbehälter 11 zurück geleitet.

Das in Fig. 3 und 4 dargestellte zweite Ausführungsbeispiel ist im Wesentlichen analog zu dem ersten Ausführungsbeispiel, das in Fig. 1 und 2 gezeigt ist, aufgebaut. Gleiche Bezugsziffern sind Elementen der Vorrichtung bzw. der Schiene mit gleicher Funktion zugeordnet.

In dem in Fig. 3 (Ruheposition, entlastet) und Fig. 4 (aktive Position) dargestellte zweiten Ausführungsbeispiel wird jedoch der schienenkopfseitige Endabschnitt 33 des Auslasses 30 zusammen mit dem Lagerblock 47' über einen Zustellweg c zwischen der ersten und der zweiten Position verschoben. Hierfür bewegt sich der Lagerblock 47' beispielsweise auf einer Führung 48, welche als Schiene ausgebildet sein kann, entlang des Zustellwegs c zwischen der Antriebseinrichtung 20 und einem Anschlagblock 46 außerhalb des Lichtraums 50. In Richtung des Schienenkopfs 7 kann eine Rückstellfeder 49, welche zwischen Lagerblock 47' und dem Anschlagblock 46 angeordnet ist, der Bewegung des Lagerblocks 47' entgegen wirken.

Das in Fig. 3 und 4 in der Entlastungsleitung 25' angeordnete 2/2-Wegeventil 26 dient in Verbindung mit der Verteilung des Schmierstoffs mittels Progressivverteiler dazu, den Restdruck vor dem Progressivverteiler möglichst schnell abzubauen, so dass ein Nachlaufen des Progressivverteilers verhindert und ein Austreten von Schmierstoff in der Ruheposition vermieden wird. Das 2/2-Wegeventil 26 kann entsprechend auch in dem ersten Ausführungsbeispiel vorgesehen sein, insbesondere wenn dieses einen Progressivverteiler beinhaltet. Wenn die erfindungsgemäße Vorrichtung keinen Progressivverteiler umfasst, so kann dieses Ventil auch entfallen.

In einem in den Fig. 1 bis 4 nicht dargestellten Ausführungsbeispiel ist ferner eine Überwachungseinrichtung vorgesehen, welche die Position des schienenkopfseitigen Endabschnitts 33, beispielsweise dessen vordere Spitze, (im Fall des ersten Ausführungsbeispiels gemäß Fig. 1 und 2) bzw. des Lagerblocks 47' (im Fall des zweiten Ausführungsbeispiels gemäß Fig. 3 und 4) überwacht. Hierfür kann beispielsweise eine optische Positionserkennung vorgesehen sein. Insbesondere in Bezug auf das zweite Ausführungsbeispiel ist auch eine elektrische/elektronische Positionserkennung, welches beispielsweise in der Führung 48 angeordnet ist, einsetzbar.

### Bezugszeichenliste:

- 1: Schiene
- 3: Fuß der Schiene 1
- 5: Steg der Schiene 1
- 7: Schienenkopf
- 8: Innenflanke/innere Seitenfläche des Schienenkopfs 7
- 9: Deckfläche des Schienenkopfs 7
- 11: Schmierstoffbehälter
- 13: Pumpe
- 15: 3/2 Wegeventil
- 17: dem Schienenkopf 7 abgewandte Kammer des Zylinders 19
- 19: Zylinder
- 20: Antriebseinrichtung
- 23: schienenkopfseitige Kammer des Zylinders 19
- 25, 25': Entlastungsleitung
- 26: 2/2-Wegeventil
- 27: Rückleitung
- 29: Kolben
- 30: Auslass
- 33: schienenkopfseitiger Endabschnitt des Auslasses 30
- 35: Stirnfläche des Kolbens 29
- 37: Rückstellfeder (Druckfeder)
- 39: schienenkopfseitige Stirnfläche
- 41: Ausgang des Zylinders 19
- 43: Verteiler
- 45: Schmierleitung
- 47, 47': Lagerblock
- 48: Führung
- 49: Rückstellfeder (Druckfeder)
- 50: Lichtraum
- b: Breite des Lichtraums 50
- h: Höhe des Lichtraums 50
- c: Zustellweg

## Patentansprüche

1. Vorrichtung zum Benetzen oder Schmieren eines Schienenkopfs (7) mit mindestens einem Auslass (30) für ein in einem Schmierstoffbehälter (11) bereitgestellten Benetzungs- und/oder Schmiermittel, wobei der mindestens eine Auslass (30) mit einer Antriebseinrichtung (20) verbunden ist, welche als Kolben-/Zylinderantrieb ausgebildet ist und den schienenkopfseitigen Endabschnitt (33) des mindestens einen Auslasses (30) zwischen einer von dem Schienenkopf (7) entfernten Position und einer dem Schienenkopf (7) angenäherten Position beweglich führt, wobei der Kolben-/Zylinderantrieb einen Kolben (29) aufweist, welcher mit dem schienenkopfseitigen Endabschnitt (33) des mindestens einen Auslasses (30) verbunden ist, wobei der Kolben (29) zur Bewegung des schienenkopfseitigen Endabschnitts (33) des mindestens einen Auslasses (30) in einem Zylinder (19) hin- und her bewegbar ist, wobei der Kolben (29) eine schienenkopfseitige erste Kammer (23) und eine dem Schienenkopf abgewandte zweite Kammer (17) aufweist, **dadurch gekennzeichnet, dass** die erste Kammer (17) über eine Pumpe (13) mit dem Schmierstoffbehälter (11) und die zweite Kammer (23) über eine Entlastungsleitung (25) mit dem Schmierstoffbehälter (11) verbunden ist, so dass mit dem Kolben-/Zylinderantrieb gleichzeitig auch das Benetzungs- und/oder Schmiermittel gefördert wird.

2. Vorrichtung nach Anspruch 1, **dadurch gekennzeichnet, dass** der schienenkopfseitige Endabschnitt (33) des Auslasses (30) rohrförmig ausgebildet ist.

3. Vorrichtung nach einem der vorhergehenden Ansprüche, **dadurch gekennzeichnet, dass** der schienenkopfseitige Endabschnitt (33) des Auslasses (30) flexibel ausgeführt ist und vorzugsweise einen Kunststoff, besonders bevorzugt PA, enthält.

4. Vorrichtung nach einem der vorhergehenden Ansprüche, **dadurch gekennzeichnet, dass** der schienenkopfseitige Endabschnitt (33) des Auslasses (30) auswechselbar ausgebildet ist.

5. Vorrichtung nach einem der vorhergehenden Ansprüche, **dadurch gekennzeichnet, dass** der schienenkopfseitige Endabschnitt (33) des Auslasses (30) in einem Lagerblock (47) geführt oder mit einem Lagerblock (47') beweglich ist.

6. Vorrichtung nach einem der vorhergehenden Ansprüche, **dadurch gekennz**e**ichnet,** dass ein Schmierleitungsabschnitt (45), der sich an den schienenkopfseitigen Endabschnitt (33) des Auslasses (30) anschließt, beweglich und/oder flexibel ausgebildet ist.

7. Vorrichtung nach einem der vorhergehenden Ansprüche, **dadurch gekennzeichnet, dass** der Auslass (30) mit einem Ausgang eines Progressivverteilers oder eines Einleitungsverteilers (43) verbunden ist.

8. Vorrichtung nach einem der vorhergehenden Ansprüche, **dadurch gekennzeichnet, dass** eine Überwachungseinrichtung vorgesehen ist, welche die Position des Auslasses (33) und/oder des Lagerblocks (47, 47') überwacht.

9. Vorrichtung nach einem der vorhergehenden Ansprüche, **dadurch gekennzeichnet, dass** die Vorrichtung neben einer Schiene, welche den Schienenkopf (7) ausbildet, festgelegt oder in einem Schienenfahrzeug angeordnet ist.

## Claims

1. A device for wetting or lubricating a railhead (7), said device having at least one outlet (30) for a wetting agent and/or lubricant contained in a lubricant reservoir (11), the at least one outlet (30) being connected to drive means (20), taking the form of a piston/cylinder drive capable of moving the railhead-side end portion (33) of the at least one outlet (30) between a position at a distance from the railhead (7) and a position closer to the railhead (7), and the piston/cylinder drive having a piston (29) connected to the railhead-side end portion (33) of the at least one outlet (30), the piston (29) being movable to and fro within a cylinder (19) for moving the railhead-side end portion (33) of the at least one outlet (30), in which case the piston (29) has a first chamber (23) on the railhead side and a second chamber (17) facing away from the raillread, **characterized in that** the first chamber (17) is connected via a pump (13) to the lubricant reservoir (11), and the second chamber (23) is connected via a relief line (25) to the lubricant reservoir (11) so that the wetting agent and/or lubricant is also delivered at the same time by means of the piston/cylinder drive.

2. A device according to Claim 1, **characterized in that** the railhead-side end portion (33) of the outlet (30) is tubular in form.

3. A device according to one of the preceding claims, **characterized in that** the railhead-side end portion (33) of the outlet (30) is flexible and preferably comprises a plastic material, particular preference being given to PA.

4. A device according to one of the preceding claims, **characterized in that** the railhead-side end portion (33) of the outlet (30) is replaceable.

5. A device according to one of the preceding claims, **characterized in that** the railhead-side end portion (33) of the outlet (30) is guided in a bearing block (47) or is movable together with a bearing block (47').

6. A device according to one of the preceding claims, **characterized in that** a length of lubricator line (45), connected to the railhead-side end portion (33) of the outlet (30), is movable and/or flexible,

7. A device according to one of the preceding claims, **characterized in that** the outlet (30) is connected to an outlet of a progressive distributor or a single-line distributor (43).

8. A device according to one of the preceding claims, **characterized in that** monitoring means are provided, which monitor the position of the outlet (33) and/or of the bearing block (47, 47').

9. A device according to one of the preceding claims, **characterized in that** the device is fixed alongside a rail which forms the railhead (7) or else it is installed in a rail vehicle.

## Revendications

1. Dispositif d'humidification ou de lubrification d'une tête de rail (7), comportant au moins une sortie (30) pour un agent humidifiant et/ou lubrifiant mis à disposition dans un réservoir de lubrifiant (11 l'au moins une sortie (30) étant raccordée à un dispositif moteur (20) qui se présente sous forme d'une commande à piston et cylindre et guidant en mobilité la section terminale située au niveau de la tête de rail (33) de l'au moins une sortie (30) entre une position éloignée de la tête de rail (7) et une position rapprochée de la tête de rail (7), la commande à piston et cylindre présentant un piston (29) qui est raccordé à la section terminale située au niveau de la tête de rail (33) de l'au moins une sortie (30), le piston (29) étant mobile en va et vient pour déplacer la section terminale située au niveau de la tête de rail (33) de l'au moins une sortie (30) dans un cylindre (19), le piston (29) comportant une première chambre située au niveau de la tête de rail (23) et une seconde chambre détournée de la tête de rail (17), **caractérisé en ce que** la première chambre (17) est raccordée via une pompe (13) au réservoir de lubrifiant (11) et la seconde chambre (23) via une conduite de décharge (25) au réservoir de lubrifiant (11), de sorte que l'agent humidifiant et/ou lubrifiant est en même temps également transporté par la commande à piston et cylindre.

2. Dispositif selon la revendication 1, **caractérisé en ce que** la section terminale située au niveau de la tête de rail (33) de la sortie (30) a une conformation tubulaire.

3. Dispositif selon une des revendications précédentes, **caractérisé en ce que** la section terminale située au niveau de la tête de rail (33) de la sortie (30) a une conformation souple et contient de préférence du plastique, particulièrement préférentiellement du PA.

4. Dispositif selon une des revendications précédentes, **caractérisé en ce que la** section terminale située au niveau de la tête de rail (33) de la sortie (30) a une conformation interchangeable.

5. Dispositif selon une des revendications précédentes, **caractérisé en ce que la** section terminale située au niveau de la tête de rail (33) de la sortie (30) passe dans un bloc de palier (47) ou est mobile avec un bloc de palier (47').

6. Dispositif selon une des revendications précédentes, **caractérisé en ce qu'**une section de conduction de lubrifiant (45) qui se raccorde à la section terminale située au niveau de la tête de rail (33) de la sortie (30) a une conformation mobile et/ou souple.

7. Dispositif selon une des revendications précédentes, **caractérisé en ce que la** sortie (30) est raccordée à une sortie d'un répartiteur progressif ou d'un répartiteur d'introduction (43).

8. Dispositif selon une des revendications précédentes, **caractérisé en ce qu'**il est prévu un dispositif de surveillance qui surveille la position de la sortie (33) et/ou du bloc de palier (47, 47').

9. Dispositif selon une des revendications précédentes, **caractérisé en ce que** le dispositif est constitué, fixé ou disposé dans un véhicule ferroviaire près d_{'}un rail qui constitue la tête de rail (7).
